# EUROPEAN PATENT SPECIFICATION

(11) **EP 0 968 794 B1**
(45) Date of publication and mention of the grant of the patent: **03.12.2003**
(21) Application number: 99202153.5
(22) Date of filing: 01.07.1999
(51) Int. Cl.: B25B 23/10, B23P 19/00, B21J 15/32

(54) **Fastening member application tool collet**
Spannfutter für Werkzeuge zum Anbringen von Befestigungsmitteln
Pince de serrage pour outils de mise en place de moyens de fixation

(30) Priority: 03.07.1998 IT MI980461 U
(43) Date of publication of application: 05.01.2000
(73) Proprietor: Cosberg S.p.A., 24030 Terno D'Isola (Bergamo) (IT)
(72) Inventor: Viscardi, Gianluigi, 24030 Carvico, Bergamo (IT)
(74) Representative: Faraggiana, Vittorio, Dr. Ing.

(56) References cited:
- US-A- 4 003 417
- US-A- 4 204 439

## Description

The present invention relates to a fastening member application tool collet with automatic fastening member feed e.g. by means of compressed air. The tool can be e.g. a screwer or an automatic riveting tool.

These tools comprise a chuck in which the screw or rivet is held in a position suitable for screwing or rivet insertion in the work in an operation which is performed by means of a specially provided handling member.

Holding the fastening element in position is done by means of collets which grip the fastening member underneath the head. The collet jaws are held closed by springs. During the screwing or riveting operation advancement of the screw or rivet forces opening of the collet jaws elastically to allow passage of the head through them.

As the fastening member is shot toward the chuck at relatively high speed the kinetic energy it possesses when it reaches the holding collet tends to open the jaws with resulting danger of untimely loss of the fastening member.

To obviate this drawback in the prior are there is a tendency to increase the force of the springs which hold the collet closed. But excessively hard springs cause the jaws to offer too much resistance to advancement of the fastening member with the risk of ruining the fastening member head and wearing out the collet in addition to interfering harmfully with the applied tightening torque.

A collet for a tool designed to apply screws is also disclosed by US 4,003,417, where a controlled means is provided to obstruct the movement of the jaws towards the open position. This obstruction means is normally held in a jaw closed position.

The general purpose of the present invention is to obviate the above mentioned drawbacks by making available a collet for an application tool for fastening elements such as screws or rivets which would be capable of holding the fastening member securely in all cases to ensure easy advancement thereof during application.

In view of this purpose it was sought to provide in accordance with the present invention a collet for an application tool for fastening members such as screws or rivets having the features mentioned in claim 1.

In accordance with the innovative principles of the present invention the elastic reaction which the collet closing springs must supply is not imposed by the need of opposing the speed and kinetic energy possessed by the screw upon its arrival in the chuck but only by the need to withhold the screw or rivet during the first stages of screwing or insertion. It is thus possible to use relatively soft springs which do not damage the head of the screw during its advancement in screwing.

To clarify the explanation of the innovative principles of the present invention and its advantages compared with the prior art there is described below with the aid of the annexed drawings a possible embodiment thereof by way of non-limiting example applying said principles. In the drawings:
- Fig. 1 shows a partially cross sectioned elevation view of a tool equipped with a collet in accordance with the present invention with the locking device activated,
- Fig. 2 shows a cross section along plane of cut II-II of Fig. 1, and
- Fig. 3 shows a detailed scrap view of the tool of Fig. 1.

A fastening member application tool 10 such as e.g. a screwing unit or a rivet insertion unit (shown only diagrammatically because virtually known as a whole) has an operational end for emergence of the fastening element (screw or rivet). The operation end has a collet 11. The tool 10 also comprises automatic feed means e.g. of the known compressed air type for screws or rivets at the operational end through a feed duct 12. Application members (not shown) cause emergence of the element to be applied and its insertion in the prepared seat.

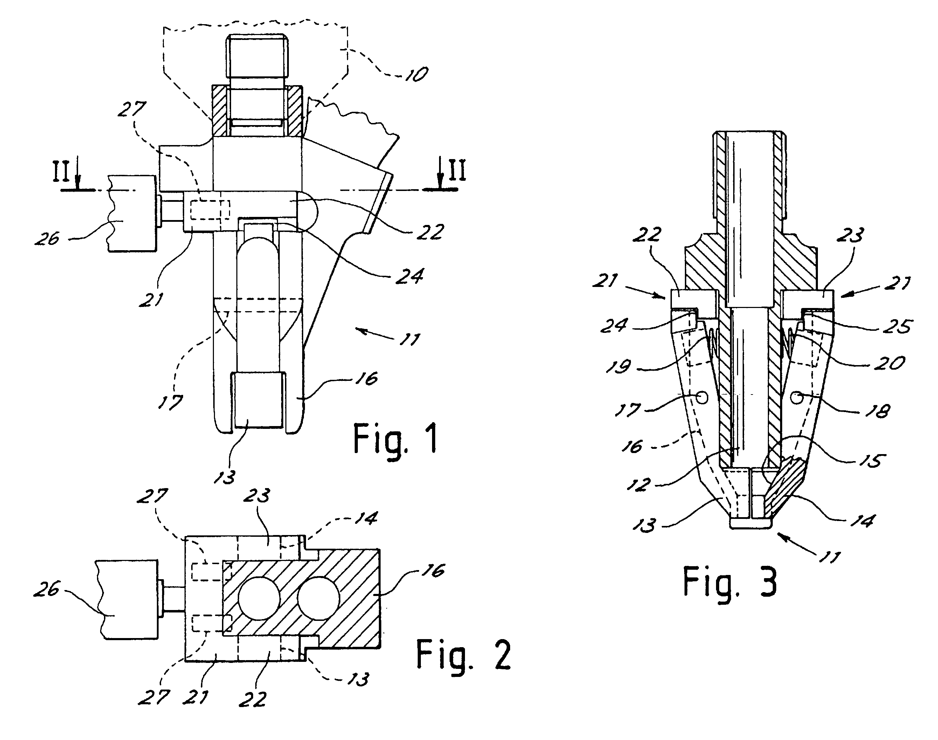

As maybe seen in detail in Fig. 3 the collet comprises a pair of jaws 13, 14 whose facing portions are shaped so as to define a seat 15 for reception of the member to be applied. For example the seat 15 can comprise guide and reception flaring for the head of a screw to be held.

The jaws 13, 14 are pivoted in their intermediate position to the collet body 16 by means of respective pins 17, 18 to be rotatable between a closed collet position (shown in Fig. 3) in which the fastening member head is held by the collet 11 and an open collet position (not shown) in which the fastening member can advance for application in the work piece.

Appropriate springs 19, 20 are interposed between the jaws 13, 14 and the body 16 of the collet to hold the jaws elastically thrust in the closing position. As the member to be applied advances, the head of the member, because of its greater size with respect to the stem, forces the jaws 13, 14 to open against the respective springs 19, 20.

Up to this point a virtually prior art technique is described as easily imaginable to one skilled in the art.

In accordance with the innovative principles of the present invention the collet 11 has a device 21 for temporary locking or obstruction of the jaws in the closed position which is active during feeding of the fastening member.

As may be seen in the figures the locking device 21 consists of a drawer with a pair of fingers 22, 23 projecting parallel in direction of the jaws 13, 14 and equipped with respective surfaces 24, 25 for engagement with corresponding portions of the jaws in such a manner as to prevent opening rotation thereof. In figures 1 and 2 the device 21 is shown in locking position with the drawer advanced towards the jaws. Advantageously the locking device 21 is driven by a linear actuator 26 shown only diagrammatically in the drawings.

Before the fastening member is fed to the collet the actuator 26 pushes the drawer 21 against the action of the spring 27 up to the position shown in the figures so that the fingers 22, 23 prevent rotation of the jaws and hence opening of the collet. In this manner holding of the fastening member in the collet 11 is assured regardless of the kinetic energy possessed by the fastening member and the hardness of the springs 19, 20.

When the fastening member advances in the piece in work the actuator is controlled in such a manner that the drawer 21 is held in retracted position pushed by the compression springs 27 which react against the collet body and the surfaces 24, 25 of the fingers 22, 23 do not engage the jaws 13, 14 which however are free to rotate without obstructing passage of the fastening member.

Advantageously operation of the actuator 26 is controlled automatically by operation of the system of fastening member feeding to the collet.

It is now clear that the tool in accordance with the present invention achieves the preset purposes of safe holding of the fastening member in the collet during feeding thereof.

Naturally the above description of an embodiment applying the innovative principles of the present invention is given by way of non-limiting example of said principles within the scope of the exclusive right claimed here.

For example the holding seat defined by the jaws could vary with respect to that shown depending on the shape of the fastening member to be applied.

In addition the closed position jaw locking means could even be yielding with less yield than the jaw thrust springs so as to obstruct passage of the fastening member until jaw movement is free.

## Claims

1. Collet for an application tool for fastening members such as screws or rivets comprising a pair of jaws (13, 14) moving against the thrust of first elastic means (19, 20) from a closed position to an open position and controlled means (21) of obstructing the movement of the jaws (13, 14) towards the open position,
**characterized in that** the obstruction means (21) are held in free jaw opening position by second elastic means (27).

2. Collet in accordance with claim 1 **characterized in that** the obstruction means consist of a pair of fingers (22, 23) projecting from a drawer (21) moving by means of a linear actuator (26) between a position of interference and a position of non-interference with the movement of the jaws.

3. Collet in accordance with claim 2 **characterized in that** for their movement the jaws are pivoted in a rotatable manner in an intermediate position between their ends while the fingers (22, 23) have surfaces (24, 25) for engagement with rear end portions of the jaws (13, 14) upon operation of the controlled means (21) with said surfaces (24, 25) inserting themselves between said rear jaw-ends to constitute an obstruction to the movement of the jaws in the opening direction.

4. Collet in accordance with claim 1 **characterized in that** the obstruction means (21) are operated by the operation of automatic feed means of the fastening members to the collet.

## Patentansprüche

1. Aufnahme für ein Werkzeug zum Anbringen von Befestigungselementen, wie beispielsweise Schrauben oder Niete, umfassend ein Paar von Backen (13, 14), die sich entgegen der Kraft erster elastischer Mittel (19, 20) aus einer geschlossenen Position in eine geöffnete Position bewegen, und gesteuerte Mittel (21) zum Blockieren der Bewegung der Backen (13, 14) in die geöffnete Stellung,
**dadurch gekennzeichnet, dass** die Blockiermittel (21) von zweiten elastischen Mitteln (27) in einer Stellung zur freien Öffnung der Backen gehalten werden.

2. Aufnahme nach Anspruch 1,
**dadurch gekennzeichnet, dass** die Blockiermittel ein Paar von Fingern (22, 23) umfassen, die von einem Schubelement (21) vorstehen, das sich mit einem Linearstellglied (26) zwischen einer Stellung zur Beeinflussung der Bewegung der Backen und einer Stellung ohne Beeinflussung bewegt.

3. Aufnahme nach Anspruch 2,
**dadurch gekennzeichnet, dass** die Backen für ihre Bewegung in rotatorischer Weise in einer Zwischenposition zwischen ihren Enden verschwenkt werden, während die Finger (22, 23) Oberflächen (24, 25) zum Angreifen an hinteren Endabschnitten der Backen (13, 14) bei Betätigung der gesteuerten Mittel (21) aufweisen, wobei die Oberflächen (24, 25) sich zwischen die hinteren Backenenden einschieben, um ein Hindernis für die Bewegung der Backen in der Öffnungsrichtung zu bilden.

4. Aufnahme nach Anspruch 1,
**dadurch gekennzeichnet, dass** die Blockiermittel (21) durch die Betätigung von automatischen Zuführmitteln für die Befestigungselemente zu der Aufnahme betätigt werden.

## Revendications

1. Pince de serrage pour un outil de mise en place de pièces de fixation tels que vis ou rivets comprenant une paire de mâchoires (13, 14) mobiles à l'encontre de la poussée d'un premier dispositif élastique (19, 20) à partir d'une position fermée vers une position ouverte, et d'un dispositif de commande (21) de blocage du mouvement des mâchoires (13, 14) en position d'ouverture,
**caractérisée en ce que** le dispositif de blocage (21 ) est maintenu dans une position d'ouverture libre des mâchoires par un deuxième dispositif élastique (27).

2. Pince de serrage selon la revendication 1 **caractérisée en ce que** le dispositif de blocage comprend une paire de doigts (22, 23) en saillie d'un tiroir (21 ) mobile au moyen d'un actionneur linéaire (26) entre une position d'interférence et une position de non-interférence avec le mouvement des mâchoires.

3. Pince de serrage selon la revendication 2 **caractérisée en ce que** les mâchoires, pour leur mouvement, sont articulées de manière rotative autour d'une position intermédiaire située entre leurs extrémités, tandis que les doigts (22, 23) ont des surfaces (24, 25) pour venir en prise avec l'extrémité arrière des mâchoires (13, 14) suite à l'action du dispositif de commande (21) avec lesdites surfaces (24, 25) s'insérant elles-mêmes entre lesdites extrémités arrière des mâchoires pour bloquer le mouvement des mâchoires dans la direction de l'ouverture.

4. Pince de serrage selon la revendication 1 **caractérisée en ce que** le dispositif de blocage (21) est actionné par le dispositif de chargement automatique des pièces de fixation à la pince de serrage.
